(19)

**Europäisches Patentamt**
**European Patent Office**
**Office européen des brevets**

(11) **EP 4 664 323 A1**

(12) **EUROPEAN PATENT APPLICATION**

(43) Date of publication:
**17.12.2025 Bulletin 2025/51**

(21) Application number: **24181455.7**

(22) Date of filing: **11.06.2024**

(51) International Patent Classification (IPC):
**G06F 16/906** (2019.01) **G06N 3/00** (2023.01)

(52) Cooperative Patent Classification (CPC):
**G06F 16/906; G06N 3/00; G06N 3/045; G06N 3/047**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
- **Rosenbaum, Lars**
 **35094 Lahntal (DE)**
- **Janjos, Faris**
 **70178 Stuttgart (DE)**
- **Dolgov, Maxim**
 **71272 Renningen (DE)**

(54) **DEVICE AND METHOD FOR TRAINING A VARIATIONAL AUTOENCODER**

(57)     Computer-implemented method for training a machine learning system (60), wherein the machine learning system (60) is configured to accept a sensor signal as input for anomaly detection and/or wherein the machine learning system (60) is configured for sampling a trajectory of a traffic participant and/or wherein the machine learning system (60) is configured for sampling of sensor signals and/or wherein the machine learning system (60) is configured for determining a value characterizing a likelihood of a sensor signal with respect to a training dataset, wherein training comprises:
• Determining, by an encoder (61) of the machine learning system (60) and based on a training sensor signal $(x_i)$, a first intermediate representation $(r_1)$ characterizing a mean of a latent distribution of a latent space $(l)$ and a second intermediate representation $(r_2)$ characterizing a variance and/or covariance of the latent distribution;
• Determining, based on the first intermediate representation $(r_1)$ and the second intermediate representation $(r_2)$, a plurality of sigma points $(\sigma)$ with respect to the latent distribution;
• Determining an output signal $(y_i)$, wherein the output signal $(y_i)$ is determined by providing a randomly sampled sigma point $(\sigma)$ of the plurality of sigma points $(\sigma)$ to a decoder (62) of the machine learning system (60);
• Adapting the machine learning system (60) based on a loss value, wherein the loss value is obtained from a loss function that comprises a term that characterizes a difference between the training sensor signal $(x_i)$ and the output signal $(y_i)$

**the method being characterized in** the loss function comprising a further term characterizing a difference of the output signal $(y_i)$ and a value sampled at random from a Normal distribution or wherein the term characterizes a likelihood of the output signal $(y_i)$ with respect to the Normal distribution, wherein further a mean of the Normal distribution is obtained by forward propagating the first intermediate representation $(r_1)$ through the decoder (62) and wherein a covariance matrix is determined by multiplying a Jacobian of the mean of the Normal distribution with the second representation and multiplying the result with a transpose of the Jacobian.

**Fig. 1**

**Description**

Technical field

The invention concerns a computer-implemented method for training a machine learning system, a computer-implemented method for anomaly detection, a computer-implemented method for sampling trajectories of traffic participants

Prior art

EP 4 343 626 A1 discloses a method for training a variational autoencoder.
Janjos et al. "Unscented Autoencoder", 2023, https://arxiv.org/pdf/2306.05256 discloses the unscented autoencoder.
Kingma and Welling "Auto-encoding variational bayes", arXiv preprint arXiv:1312.6114, 2013 discloses a variational autoencoder

Technical background

Variational autoencoders (VAE) are used as backbones in solving a plurality of technical problems. For example, a VAE may be used for detecting anomalies in sensor measurements. It is also possible to use VAEs for sampling new sensor measurements based on an existing set of sensor measurements. The sampled sensor measurements may then in turn be used to train a machine learning system for classification and/or regression analysis based on the sensor measurements.
Training a VAE requires computing gradients with respect to an encoder of the VAE and a decoder of the VAE. While computing these gradients is relatively straightforward for parameters of the encoder, it requires a high-variance policy gradient for the posterior parameters. To avoid this issue in practice, the reparameterization trick is used to simplify the approximate posterior sampling by means of an easy-to-sample distribution. For example, with a Gaussian posterior, one can sample a multivariate normal and obtain a latent representation, which can then be forwarded to a decoder of the machine learning system.
However, taking a single or few random samples in the VAE setting can produce instances very far from the mean, especially in high dimensional spaces. In order to counter this, the use of called sigma points, i.e., predefined points in relation to the distribution predicted from the encoder, has been proposed.
However, the inventors found that training a machine learning system using sigma points requires the use of $2n + 1$ training samples on average in order to accurately estimate the mean and covariance for the VAE, wherein $n$ is the dimension of the latent space. Advantageously, the method with feature of claim 1 allows for a rapid decrease in training time necessary to accurately estimate the mean and covariance.

Disclosure of the invention

In a first aspect, the invention concerns a computer-implemented method for training a machine learning system, wherein the machine learning system is configured to accept a sensor signal as input for anomaly detection and/or wherein the machine learning system is configured for sampling a trajectory of a traffic participant and/or wherein the machine learning system is configured for sampling of sensor signals and/or wherein the machine learning system is configured for determining a value characterizing a likelihood of a sensor signal with respect to a training dataset, wherein training comprises:

- Determining, by an encoder of the machine learning system and based on a training sensor signal, a first intermediate representation characterizing a mean of a latent distribution of a latent space and a second intermediate representation characterizing a variance and/or covariance of the latent distribution;
- Determining, based on the first intermediate representation and the second intermediate representation, a plurality of sigma points with respect to the latent distribution;
- Determining an output signal, wherein the output signal is determined by providing a randomly sampled sigma point of the plurality of sigma points to a decoder of the machine learning system;
- Adapting the machine learning system based on a loss value, wherein the loss value is obtained from a loss function that comprises a term that characterizes a difference between the training sensor signal and the output signal

**the method being characterized in** the loss function comprising a further term characterizing a difference of the output signal and a value sampled at random from a Normal distribution or wherein the term characterizes a likelihood of the output signal with respect to the Normal distribution, wherein further a mean of the Normal distribution is obtained by forward propagating the first intermediate representation through the decoder and wherein a covariance matrix is determined by multiplying a Jacobian of the mean of the Normal distribution with the second representation and multiplying the result with a transpose of the Jacobian.

The machine learning system may be understood to characterize an autoencoder, especially a variational autoencoder. Typically, an autoencoder comprises an encoder part that maps input signals, e.g., sensor signals, of the autoencoder to a latent space. The decoder in turn is able to map from the latent space back to the space of the input signal. This way, an autoencoder is able to model a distribution of latent factors in the input signal in the latent space. In a variational autoencoder, the distribution is conditioned on a prior distribution, typically a standard multivariate normal distribution.

The machine learning system may be used for a variety of different applicants. For example, it can be used for anomaly detection. This may be achieved by mapping a sensor signal to a latent representation (typically a latent vector) of the latent space with the encoder and mapping the determined latent representation back to the space of the sensor signal with the decoder. A difference between the sensor signal and the mapped back representation may then be used as a measure for how anomalous the sensor signal is. For example, the difference may be compared to a predefined threshold and the sensor signal may be considered as anomalous if the difference exceeds the threshold.

Alternatively, the decoder may be used for sampling sensor signals. This may be achieved by first training the machine learning system with sensor signals from some physical domain (e.g., signals obtained from a sensor or trajectories of objects in the physical word). Afterwards, a latent representation may be sampled at random and forwarded through the decoder of the machine learning system. The output signal of the decoder then characterizes an sensor signal as would appear in the physical domain.

Alternatively, the machine learning system may also be used to determine a value characterizing a likelihood of a sensor signal supplied to the machine learning system. That is, the machine learning system may determine how likely it is to observe a sensor signal based on having seen a plurality of sensor signals during training. The density value may, for example, be obtained by determining a first intermediate representation for the sensor signal by means of the encoder and determining a density value of the mean characterized by the first intermediate representation with respect to a standard multivariate normal distribution. The value characterizing a likelihood may also be used for anomaly detection, e.g., by determining the sensor signal as anomalous if the value characterizing the likelihood falls below a predefined threshold and determining the sensor signal to be normal otherwise.

It is also possible to configure the machine learning system for multiple of the described tasks. For example, the machine learning system may be able to determine a likelihood value for a given sensor signal while also being able to sample sensor signals based on the latent space.

For training the machine learning system, the encoder of the machine learning system first predicts the first intermediate representation and the second intermediate representation for the training sensor signal. The encoder may be understood as a sub-machine learning system of the machine learning system. Preferably, the encoder is a neural network, which accepts the training sensor signal as input a provides the first intermediate representation and the second intermediate representation as output. The first intermediate representation and second intermediate representation may be understood as characterizing a man and a variance and/or covariance of a distribution of latent factors for the training sensor signal.

Different from other methods for training an encoder-decoder machine learning system (e.g., autoencoders, in particular variational autoencoders), the method does not apply the reparameterization trick by randomly sampling the latent distribution characterized by the mean and the variance and/or covariance. Instead, a plurality of sigma points is advantageously determined in the method. A plurality of sigma points may be understood as a plurality of points in the latent space that have a fixed relative position with respect to the latent distribution.

Having determined the sigma points, a sigma point is then sampled at random from the plurality of sigma points and provided to the decoder of the machine learning system. The decoder may, again, be understood as a sub-machine learning system of the machine learning system and may also preferably be in the form of a neural network. An output signal of the decoder may be understood as a sensor signal from the space of the training sensor signal. The output signal determined for the randomly sampled sigma point may then be understood as an attempt of a reconstruction of the training sensor signal based on the sigma point.

The machine learning system, in particular parameters of the machine learning system, are then adapted based on a different between the training sensor signal and the output signal, i.e., the reconstruction of the sensor signal. This is preferably achieved by means of determining a loss value characterizing the difference and adapting at least one parameter of the machine learning system based on gradient descent, wherein a gradient of the loss value with respect to the at least one parameter is determined by means of backpropagation.

Additionally, the loss function comprises a further term as described above. The advantage of using this further term is that latent probability density function (represented by the first representation and the second representation) are nonlinearly projected in order to determine another sample to compare to the sensor signal.

The authors found that applying this loss function leads to a faster training time of the machine learning system.

Advantageously, the author found that by using the sigma points a variance of the gradient with respect to the loss value is reduced. This leads to a smoother optimization problem and in turn a better modelling of the latent factors of the training sensor signal by the machine learning system. Empirically, the authors could verify that, for example, output signals (i.e., reconstructions of an sensor signal) are closer to a corresponding sensor signal than in other methods. This advantageously leads to a better capability of anomaly detection as well as sampling sensor signals based on the decoder.

In preferred embodiments, the sigma points in the plurality of sigma points are mean-centered symmetric points, preferably comprising the mean characterized by the first intermediate representation.

The authors found that advantageously, the mean-centered symmetric points are best suited as sigma points in reducing a variance in the gradient.

Preferably, the mean-centered symmetric points are determined according to the formulae:

$$\chi_0 = \mu,$$

$$\chi_i = \mu + \sqrt{(\kappa + n)\Sigma},$$

$$\chi_{i+n} = \mu - \sqrt{(\kappa + n)\Sigma},$$

wherein $\kappa > -n$ is a predefined real constant, $n$ is a dimensionality of the latent space, $\mu$ is the mean and $\Sigma$ is the variance and/or covariance. The variables i and $n$ characterize the respective index of a sigma point. As is common, the sigma points are defined as a set $\{\chi_i\}_{i=0}^{2n}$ of $2n + 1$ mean-centered symmetric points (incl. the mean), e.g., der formulae above are valid for $0 \leq i \leq n$.

In preferred embodiments, the second intermediate representation may further characterize a full covariant matrix of the latent distribution. The term $\Sigma$ may hence be understood as a covariance matrix predicted from the encoder.

For reasons of simplicity, encoders of variational autoencoders are configured to only predict the variances of the latent distribution (i.e., the main diagonal of the covariance matrix). The authors found, that when configuring the encoder to predict a full covariance matrix, the best performing embodiments of the machine learning system all advantageously predict non-diagonal covariance matrices. In turn, the configuration for predicting full covariance matrices enables the machine learning system to model a better latent distribution, leading to a machine learning system that performs even better in anomaly detection or when sampling from the machine learning system using a random sample from the latent space and the decoder.

In preferred embodiments, the loss function is characterized by the formulae:

$$\mathcal{L}_{\text{UAE}} = E_{x_i \sim p_{\text{data}}}[\mathcal{L}_{\text{REC}} + \beta \cdot \mathcal{L}_{KL}] + \mathcal{L}_{ext},$$

$$\mathcal{L}_{\text{REC}} = \|x_i - D(z)\|_2^2, \qquad z \sim \{\chi_i(\mu, \Sigma)\}_{i=0}^{2n},$$

$$\mathcal{L}_{\text{KL}} = \|\mu\|_2^2 + tr(\Sigma) - n - \log \det \Sigma,$$

$$\mathcal{L}_{ext} = E_{\hat{x} \sim N(\hat{\mu}, \hat{\Sigma})}[x_i - \hat{x}] \text{ or } \mathcal{L}_{ext} = \log\left(N(x_i|\hat{\mu}, \hat{\Sigma})\right),$$

$$\hat{\mu} = D(\mu), \hat{\Sigma} = (\nabla_\mu D(\mu))\Sigma(\nabla_\mu D(\mu))^T$$

wherein $x_i$ is the training sensor signal, $p_{\text{data}}$ is an empirical distribution, e.g., a training dataset, D is the decoder of the machine learning system, z is a randomly sampled sigma point of the plurality of sigma points $\{\chi_i(\mu, \Sigma)\}_{i=0}^{2n}$, $\mu$ is the first representation ($r_1$), $\Sigma$ is the second representation ($r_2$), $\hat{\mu}$ is the mean of the Normal distribution and $\hat{\Sigma}$ is the covariance matrix of the Normal distribution. This definition of the loss function may be understood as analogous to a loss function used for variational autoencoders, however, the proposed loss function accounts for the use of the sigma points in the proposed machine learning system as well as for the additional regularization term $\mathcal{L}_{ext}$. The term $\mathcal{L}_{\mathrm{KL}}$ may be understood as a Kullback-Leibler divergence of the distribution characterized by the mean and variance and/or covariance to a prior distribution chosen at the preference of the user of the machine learning system. In the preferred embodiments, the prior distribution is a standard multivariate normal distribution but other distributions are possible as well.

For simplicity, the Kullback-Leibler divergence may also be approximated by means of a Frobenius norm of a mismatch of $\Sigma$ to an identity matrix, i.e., according to the formula:

$$\mathcal{L}_{\mathrm{KL}} \approx \|\boldsymbol{\mu}\|_2^2 + \|\boldsymbol{\Sigma} - \boldsymbol{I}\|_F,$$

wherein $\boldsymbol{I}$ is an identity matrix of the same shape as $\Sigma$. Advantageously, the approximation alleviates numerical instabilities during training of the machine learning system and thus prevents failure or divergence during training.

Preferably, the loss function may further comprise a regularization term penalizing an input-output gradient, weighted by the largest eigenvalue of the covariance matrix. The regularization term may be characterized by the formula:

$$\mathcal{L}_{\mathrm{REG}} = \lambda_{max}(\boldsymbol{\Sigma})\|\nabla_{\boldsymbol{z}}D(\boldsymbol{z})\|_2^2,$$

wherein $\lambda_{max}$ is a largest eigenvalue of $\Sigma$ and $\nabla_z D(\boldsymbol{z})$ is a gradient of the loss function with respect to z.

Advantageously, the regularization enables an even better modelling of the latent distribution and hence an increased performance in the different tasks the machine learning system may be used for.

In general, the training sensor signal may be obtained based on a sensor. That is, the machine learning system may especially configured for processing sensor signals. The sensor signal may be obtained from a plurality of different sensors, e.g., a camera, a LIDAR sensor, a radar, an ultrasonic sensor, a thermal camera, a piezo sensor, a Hall sensor, a microphone, a thermometer, or an acceleration sensor. The different sensor signals may especially be assessed by the machine learning system with respect to if they characterize anomalous signals. The machine learning signal being configured to process sensor signals may especially be understood such that

Embodiments of the invention will be discussed with reference to the following figures in more detail. The figures show:

Figure 1     schematically a machine learning system during training;

Figure 2     a training system for training the machine learning system;

Figure 3     a control system comprising a machine learning system controlling an actuator in its environment;

Figure 4     the control system controlling an at least partially autonomous robot;

Figure 5     the control system controlling a manufacturing machine;

Figure 6     the control system controlling a surveillance system.

Description of the embodiments

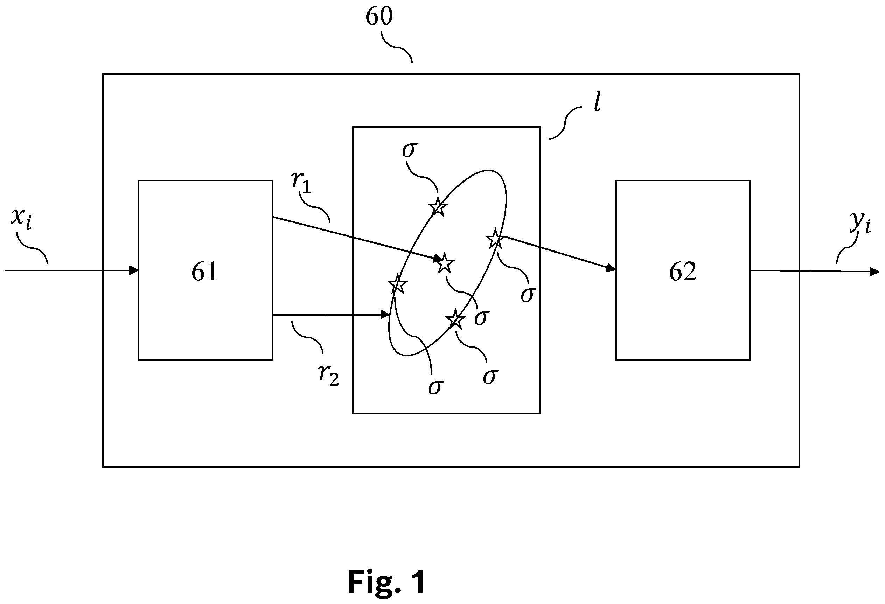

Figure 1 shows an embodiment of a machine learning system (60) during training of the machine learning system (60). The machine learning system comprises an encoder (61), which is configured for accepting sensor signals and mapping the sensor signals to a first intermediate ($r_1$) representation characterizing a mean and a second intermediate representation ($r_2$) characterizing a covariance matrix. In other embodiments, the second intermediate representation ($r_2$) may also only characterize variances, i.e., a main diagonal of a covariance matrix. However, a full covariance matrix is preferred. The mean and the covariance matrix characterize a distribution, e.g., a normal distribution, in a latent space ($l$).

The encoder (61) is provided an sensor signal ($x_i$), for which the encoder (61) determines a first intermediate representation ($r_1$) and a second intermediate representation ($r_2$).

Based on the mean and the covariance matrix, a plurality of sigma points ($\sigma$) is determined. Preferably, the sigma points are determined according to the formulae:

$$\chi_0 = \boldsymbol{\mu},$$

$$\chi_i = \mu + \sqrt{(\kappa + n)\Sigma},$$

$$\chi_{i+n} = \mu - \sqrt{(\kappa + n)\Sigma},$$

wherein $\kappa > -n$ is a predefined real constant, $n$ is a dimensionality of the latent space, $\mu$ is the mean and $\Sigma$ is the covariance matrix.

In the embodiment, a single sigma point ($\sigma$) is then sampled at random from the plurality of sigma points ($\sigma$) and provided as input to an decoder (62) of the machine learning system. Both encoder (61) and decoder (62) are preferably sub-machine learning systems of the machine learning system (60), even more preferably neural networks. Based on the provided sigma point ($\sigma$), the decoder (62) then determines an output signal ($y_i$) of the same shape as the sensor signal ($x_i$). For example, if the sensor signal ($x_i$) is a vector, the output signal ($y_i$) is of the same dimensionality as the sensor signal ($x_i$). If the sensor signal ($x_i$) is a matrix or a tensor, the output signal ($y_i$) is a matrix or tensor respectively of the same number of dimensions along each axis as are in the sensor signal ($x_i$).

In further embodiments (not shown), it is also possible that a plurality of sigma points ($\sigma$) are sample from the plurality of sigma points ($\sigma$) and that an output signal ($y_i$) is determined for each sampled sigma point ($\sigma$), thereby determining a plurality of output signals ($y_i$).

In general, the machine learning system (60) may be understood as a variational autoencoder.

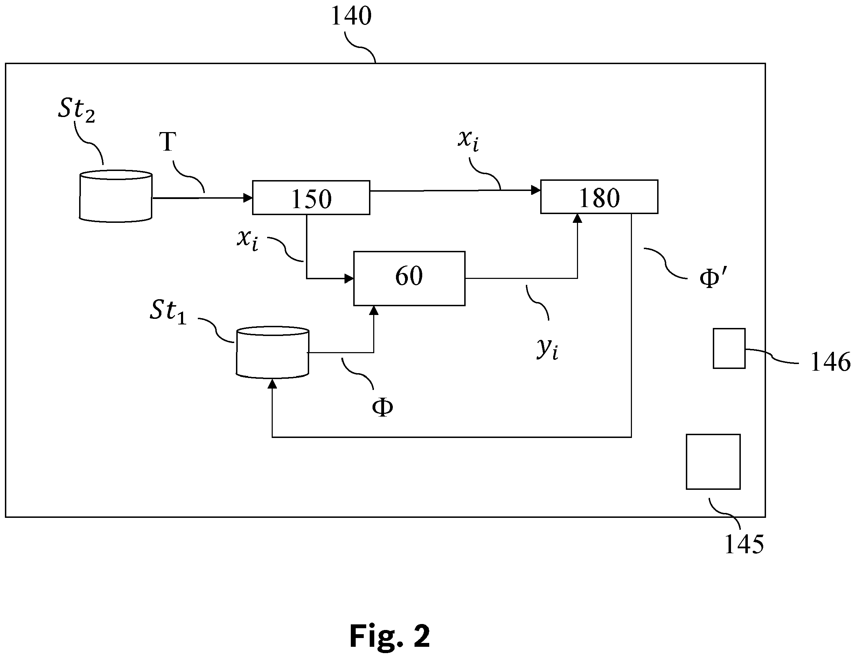

Figure 2 shows an embodiment of a training system (140) for training the machine learning system (60 means of a training data set (T). The training data set (T) comprises a plurality of sensor signals ($x_i$) which are used for training the machine learning system (60).

For training, a training data unit (150) accesses a computer-implemented database ($St_2$), the database ($St_2$) providing the training data set (T). The training data unit (150) determines from the training data set (T) preferably randomly at least one sensor signal ($x_i$) and transmits the sensor signal ($x_i$) to the machine learning system (60). The machine learning system (60) determines an output signal ($y_i$) based on the sensor signal ($x_i$).

The sensor signal ($x_i$) and the determined output signal ($y_i$) are transmitted to a modification unit (180).

Based on the sensor signal ($x_i$) and the determined output signal ($y_i$), the modification unit (180) then determines new parameters ($\Phi'$) for the machine learning system (60). For this purpose, the modification unit (180) compares the sensor signal ($x_i$) and the determined output signal ($y_i$) using a loss function.

The loss function may preferably be given by the formulae:

$$\mathcal{L}_{\text{UAE}} = E_{x_i \sim p_{\text{data}}}[\mathcal{L}_{\text{REC}} + \beta \cdot \mathcal{L}_{KL}] + \mathcal{L}_{ext},$$

$$\mathcal{L}_{\text{REC}} = \|x_i - D(z)\|_2^2, \qquad z \sim \{\chi_i(\mu, \Sigma)\}_{i=0}^{2n},$$

$$\mathcal{L}_{\text{KL}} = \|\mu\|_2^2 + tr(\Sigma) - n - \log \det \Sigma,$$

$$\mathcal{L}_{ext} = E_{\hat{x} \sim N(\hat{\mu}, \hat{\Sigma})}[x_i - \hat{x}] \text{ or } \mathcal{L}_{ext} = \log\big(N(x_i|\hat{\mu}, \hat{\Sigma})\big),$$

$$\hat{\mu} = D(\mu), \hat{\Sigma} = (\nabla_\mu D(\mu))\Sigma(\nabla_\mu D(\mu))^T$$

wherein $x_i$ is the training sensor signal, $p_{\text{data}}$ is an empirical distribution, e.g., a training dataset, D is the decoder of the machine learning system, z is a randomly sampled sigma point of the plurality of sigma points $\{\chi_i(\mu, \Sigma)\}_{i=0}^{2n}$, $\mu$ is the first representation ($r_1$), $\Sigma$ is the second representation ($r_2$), $\hat{\mu}$ is the mean of the Normal distribution and $\hat{\Sigma}$ is the covariance matrix of the Normal distribution.

In other embodiments, the $\mathcal{L}_{\text{KL}}$ of the loss function may be approximated by:

$$\mathcal{L}_{\text{KL}} \approx \|\mu\|_2^2 + \|\Sigma - I\|_F,$$

wherein I is an identity matrix of the same shape as $\Sigma$.

Preferably, the loss function may further comprise a regularization term penalizing an input-output gradient, weighted by the largest eigenvalue of the covariance matrix. The regularization term may be characterized by the formula:

$$\mathcal{L}_{\mathrm{REG}} = \lambda_{max}(\boldsymbol{\Sigma}) \|\nabla_{\boldsymbol{z}} D(\boldsymbol{z})\|_2^2,$$

wherein $\lambda_{max}$ is a largest eigenvalue of $\Sigma$ and $\nabla_z D(z)$ is a gradient of the loss function with respect to $z$.

The term $\mathcal{L}_{\mathrm{KL}}$ may preferably be multiplied by another hyperparameter $\gamma$ and the product may then be to $\mathcal{L}_{\mathrm{UAE}}$ to form a preferred loss function.

Based on the loss function, a first loss value is determined, which characterizes how far the determined output signal ($y_i$) deviates from the sensor signal ($x_i$).

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other embodiments, the machine learning system (60) may determine a plurality of output signal ($y_i$) based on sampling a plurality of sigma points ($\sigma$). In these embodiments, a loss value may be determined for each of the determined output signals ($y_i$) based on the loss function described above. The different loss values may then be averaged in order to determine a single loss value. Gradient descent may then be run with respect to the single loss value.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the machine learning system (60). Parameters ($\Phi$) of the machine learning system (60) may especially be parameters ($\Phi$) of the encoder (61) or the decoder (62).

Furthermore, the training system (140) may comprise at least one processor (145) and at least one machine-readable storage medium (146) containing instructions which, when executed by the processor (145), cause the training system (140) to execute a training method according to one of the aspects of the invention.

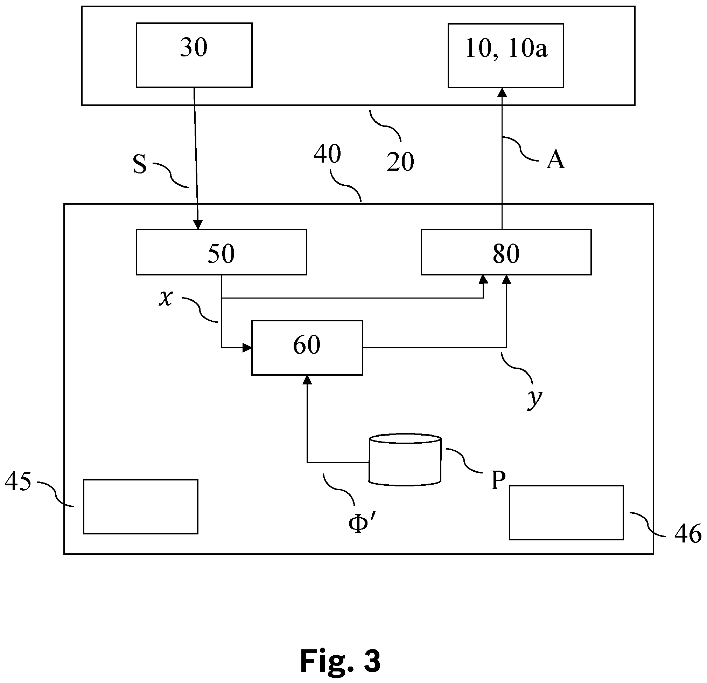

Figure 3 shows an embodiment of a control system (40) configured for controlling an actuator (10) in its environment (20) by means of the machine learning system (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into sensor signals (x). Alternatively, in case of no receiving unit (50), each sensor signal (S) may directly be taken as an sensor signal (x). The sensor signal (x) may, for example, be given as an excerpt from the sensor signal (S). Alternatively, the sensor signal (S) may be processed to yield the sensor signal (x). In other words, the sensor signal (x) is provided in accordance with the sensor signal (S).

The sensor signal (x) is then passed on to the machine learning system (60).

The machine learning system (60) is parametrized by parameters ($\Phi$), which are stored in and provided by a parameter storage ($St_1$).

The machine learning system (60) determines an output signal (y) from the sensor signals (x). The output signal (y) comprises information that assigns one or more labels to the sensor signal (x). The sensor signal and the output signal (y) are transmitted to a conversion unit (80), which determines the control signals (A) based on the sensor signal (x) and the output signals (y). The control signals (A) are then transmitted to the actuator (10) for controlling the actuator (10) accordingly.

The actuator (10) receives control signals (A), is controlled accordingly, and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

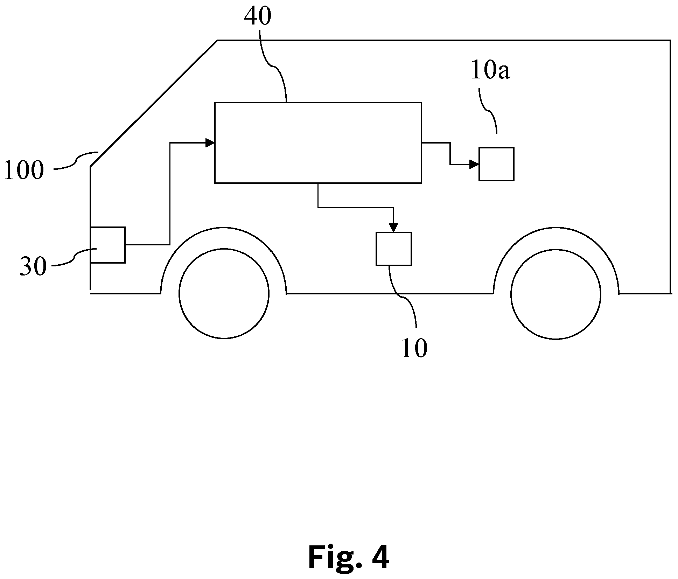

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The sensor signal (x) may hence be understood as an input image.

The control system (40) may be configured to determine, whether the input image (x) is anomalous or not. The control signal (A) may then be determined in accordance with this information. For example, if an sensor signal (x) is determined as being anomalous, an automated control of the actuator (10) may be stopped and control of the actuator (10) may be handed over to an operator or driver of the robot (100).

The actuator (10), which is preferably integrated in the vehicle (100), may be given by a brake, a propulsion system, an engine, a drivetrain, or a steering of the vehicle (100).

Alternatively or additionally, the control signal (A) may also be used to control the display (10a), e.g., for displaying a warning in case an anomaly is detected. Th warning may also be given to an operator or driver by means of a warning sound and/or a haptic signal, e.g., a vibration of a steering wheel of the vehicle.

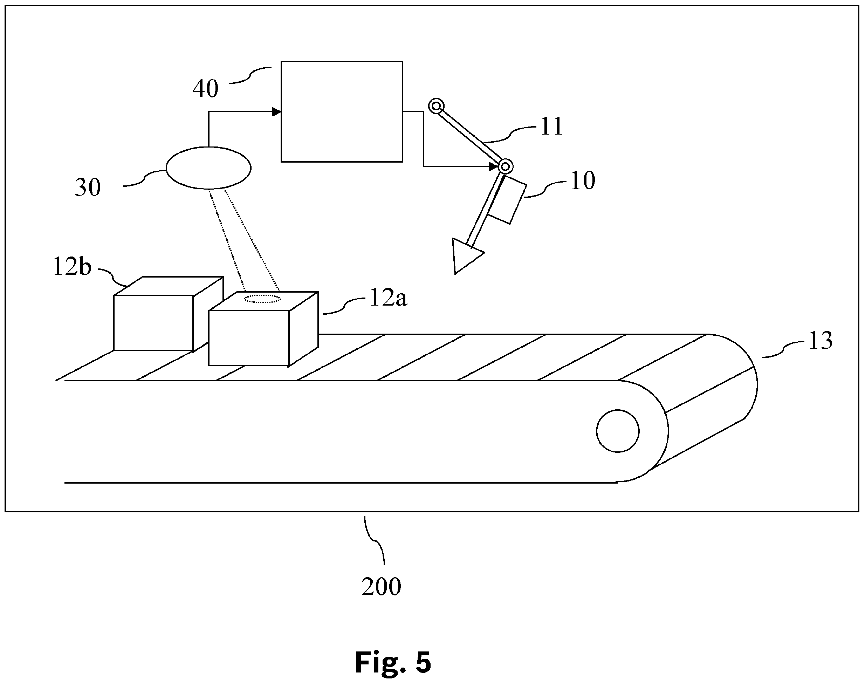

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The control system (40) may determine whether a manufactured product (12) is anomalous or not. In case an anomaly is detected. The actuator (10) may then be controlled as to remove the manufactured product from the transportation device.

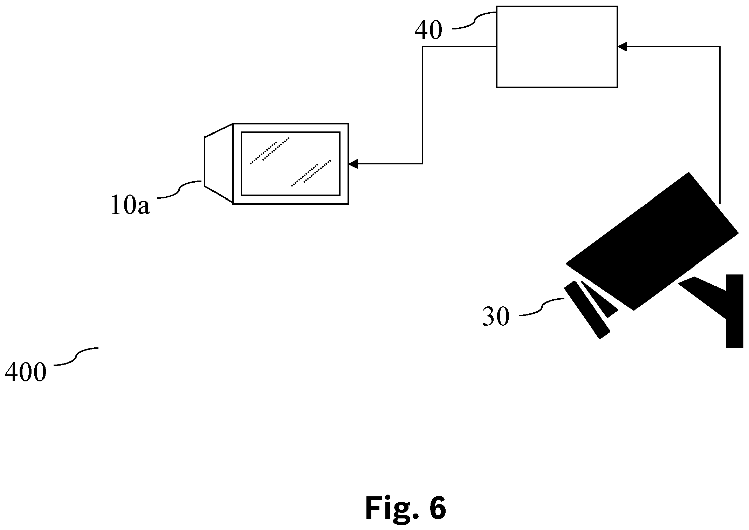

Figure 6 shows an embodiment in of a surveillance system (400). The sensor (30) is configured to detect a scene that is under surveillance. The control system (40) does not necessarily control an actuator (10), but may alternatively control a display (10a). For example, the control system (40) may determine whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the control system (40).

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method for training a machine learning system (60), wherein the machine learning system (60) is configured to accept a sensor signal as input for anomaly detection and/or wherein the machine learning system (60) is configured for sampling a trajectory of a traffic participant and/or wherein the machine learning system (60) is configured for sampling of sensor signals and/or wherein the machine learning system (60) is configured for determining a value characterizing a likelihood of a sensor signal with respect to a training dataset, wherein training comprises:

   • Determining, by an encoder (61) of the machine learning system (60) and based on a training sensor signal ($x_i$), a first intermediate representation ($r_1$) characterizing a mean of a latent distribution of a latent space ($l$) and a second intermediate representation ($r_2$) characterizing a variance and/or covariance of the latent distribution;
   • Determining, based on the first intermediate representation ($r_1$) and the second intermediate representation ($r_2$), a plurality of sigma points ($\sigma$) with respect to the latent distribution;
   • Determining an output signal ($y_i$), wherein the output signal ($y_i$) is determined by providing a randomly sampled sigma point ($\sigma$) of the plurality of sigma points ($\sigma$) to a decoder (62) of the machine learning system (60);
   • Adapting the machine learning system (60) based on a loss value, wherein the loss value is obtained from a loss function that comprises a term that characterizes a difference between the training sensor signal ($x_i$) and the

output signal ($y_i$)

**the method being characterized in** the loss function comprising a further term characterizing a difference of the output signal ($y_i$) and a value sampled at random from a Normal distribution or wherein the term characterizes a likelihood of the output signal ($y_i$) with respect to the Normal distribution, wherein further a mean of the Normal distribution is obtained by forward propagating the first intermediate representation ($r_1$) through the decoder (62) and wherein a covariance matrix is determined by multiplying a Jacobian of the mean of the Normal distribution with the second representation and multiplying the result with a transpose of the Jacobian.

2. Method according to claim 1, wherein the sigma points ($\sigma$) in the plurality of sigma points ($\sigma$) are mean-centered symmetric points, preferably comprising the mean **characterized by** the first intermediate representation ($r_1$).

3. Method according to claim 2, wherein the plurality of sigma points ($\sigma$) is determined according to the formulae:

4.

$$\chi_0 = \mu,$$

$$\chi_i = \mu + \sqrt{(\kappa + n)\Sigma},$$

$$\chi_{i+n} = \mu - \sqrt{(\kappa + n)\Sigma},$$

wherein $\kappa > -n$ is a predefined real constant, $n$ is a dimensionality of the latent space, $\mu$ is the first representation ($r_1$) and $\Sigma$ is the second representation ($r_2$).

5. Method according to any one of the claims 1 to 3, wherein the second intermediate representation ($r_2$) characterizes a full covariant matrix of the latent distribution.

6. Method according to any one of the claims 1 to 4, wherein the loss function is **characterized by** the formulae:

7.

$$\mathcal{L}_{\text{UAE}} = E_{x_i \sim p_{\text{data}}}[\mathcal{L}_{\text{REC}} + \beta \cdot \mathcal{L}_{KL}] + \mathcal{L}_{ext},$$

$$\mathcal{L}_{\text{REC}} = \|x_i - D(z)\|_2^2, \qquad z \sim \{\chi_i(\mu, \Sigma)\}_{i=0}^{2n},$$

$$\mathcal{L}_{\text{KL}} = \|\mu\|_2^2 + tr(\Sigma) - n - \log \det \Sigma,$$

$$\mathcal{L}_{ext} = E_{\hat{x} \sim N(\hat{\mu}, \hat{\Sigma})}[x_i - \hat{x}] \text{ or } \mathcal{L}_{ext} = \log(N(x_i|\hat{\mu}, \hat{\Sigma}),$$

$$\hat{\mu} = D(\mu), \hat{\Sigma} = (\nabla_\mu D(\mu))\Sigma(\nabla_\mu D(\mu))^T$$

8. wherein $x_i$ is the training sensor signal, $p_{\text{data}}$ is an empirical distribution, e.g., a training dataset, D is the decoder (62) of the machine learning system (60), z is a randomly sampled sigma point of the plurality of sigma points $\{\chi_i(\mu, \Sigma)\}_{i=0}^{2n}$, $\mu$ is the first representation ($r_1$), $\Sigma$ is the second representation ($r_2$), $\hat{\mu}$ is the mean of the Normal distribution and $\hat{\Sigma}$ is the covariance matrix of the Normal distribution.

9. Method according to claim 5, wherein the loss function further comprises a regularization term **characterized by** the formula:

$$\mathcal{L}_{\text{REG}} = \lambda_{max}(\mathbf{\Sigma})\|\nabla_{\mathbf{z}}D(\mathbf{z})\|_2^2,$$

wherein $\lambda_{max}$ is a largest eigen value of $\Sigma$ and $\nabla_z D(\mathbf{z})$ is a gradient of the loss function with respect to z.

10. Computer-implemented method for determining, whether a sensor signal (x) is anomalous or normal, the method comprising the steps of:

   • Obtaining a machine learning system (60) that is configured for anomaly detection and that has been trained according to any one of the claims 1 to 6;
   • Providing the sensor signal (x) to the encoder (61) of the machine learning system (60), thereby determining a first intermediate representation ($r_1$);
   • Determining an output signal (y) by providing the first intermediate representation as input to the decoder (62) of the machine learning system (60);
   • Determining the sensor signal (x) as anomalous if a difference between the output signal (y) and the sensor signal (x) exceeds a predefined threshold; otherwise determine the sensor signal (x) as normal.

11. Computer-implemented method for sampling a trajectory of a traffic participant and/or a sampling sensor signal (S) comprising the steps of:

   • Obtaining a machine learning (60) that has been trained according to any one of the claims 1 to 6 and that is configured for trajectory sampling and/or sampling a sensor signal;
   • Randomly drawing a value from the latent space (*l*) **characterized by** the machine learning system (60);
   • Determining an output signal (*y*) characterizing a trajectory and/or a sampled sensor signal by providing the randomly drawn value to the decoder (62) of the machine learning system (60).

12. Training system (140), which is configured to carry out the training method according to any one of the claims 1 to 6.

13. Control system (40), which is configured to carry out the method according to claim 7, wherein the control system (40) determines a control signal (A) based on output signal (*y*), wherein the control signal (A) is configured to control an actuator (10) and/or a display (10a).

14. Computer program that is configured to cause a computer to carry out the method according to any one of the claims 1 to 8 with all of its steps if the computer program is carried out by a processor (45, 145).

15. Machine-readable storage medium (46, 146) on which the computer program according to claim 11 is stored.

**Fig. 1**

**Fig. 2**

EP 4 664 323 A1

**Fig. 3**

**Fig. 4**

**Fig. 5**

10a

40

30

400

Fig. 6

Europäisches Patentamt

European Patent Office

Office européen des brevets

## EUROPEAN SEARCH REPORT

**Application Number**

EP 24 18 1455

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 4 343 626 A1 (BOSCH GMBH ROBERT [DE]) 27 March 2024 (2024-03-27) * abstract * * paragraph [0031] - paragraph [0036] * * paragraph [0041] - paragraph [0047] * * claims 1,7 * * figures 3-6 * | 1-15 | INV. G06F16/906 G06N3/00 |
| A | SLAVIC GIULIA ET AL: "Anomaly Detection in Video Data Based on Probabilistic Latent Space Models", 2020 IEEE CONFERENCE ON EVOLVING AND ADAPTIVE INTELLIGENT SYSTEMS (EAIS), IEEE, 27 May 2020 (2020-05-27), pages 1-8, XP033784058, DOI: 10.1109/EAIS48028.2020.9122766 [retrieved on 2020-06-22] * the whole document * | 1-15 | |
| | | | **TECHNICAL FIELDS SEARCHED (IPC)** |
| | | | G06F G06N |

The present search report has been drawn up for all claims

| Place of search | Date of completion of the search | Examiner |
|---|---|---|
| Berlin | 15 November 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 18 1455

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| EP 4343626 | A1 | 27-03-2024 | CN | 117744707 A | 22-03-2024 |
| | | | EP | 4343626 A1 | 27-03-2024 |
| | | | US | 2024095595 A1 | 21-03-2024 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4343626 A1

**Non-patent literature cited in the description**

- **JANJOS et al.** *Unscented Autoencoder*, 2023, https://arxiv.org/pdf/2306.05256

- **KINGMA** ; **WELLING**. Auto-encoding variational bayes. *arXiv preprint arXiv:1312.6114*, 2013